# EUROPEAN PATENT SPECIFICATION

(11) **EP 3 637 681 B1**
(45) Date of publication and mention of the grant of the patent: **10.09.2025**
(21) Application number: 18200181.8
(22) Date of filing: 12.10.2018
(51) Int. Cl.: H04L 43/0811, H04L 43/10, H04L 12/18

(54) **MULTICAST CONNECTIVITY CHECK BASED ON IP PACKETS**
MULTICAST-KONNEKTIVITÄTSPRÜFUNG BASIEREND AUF IP-PAKETEN
CONTRÔLE DE CONNECTIVITÉ MULTIDIFFUSION BASÉ SUR DES PAQUETS IP

(43) Date of publication of application: 15.04.2020
(73) Proprietor: Nokia Solutions and Networks Oy, 02610 Espoo (FI)
(72) Inventor: REINARTZ, Ole, 89081 Ulm (DE); VISHWANATHA, Ramu, 54155 Wroclaw (PL)
(74) Representative: Louis Pöhlau Lohrentz

(56) References cited:
- EP-A1- 1 344 349
- US-A1- 2011 164 505
- US-A1- 2012 189 020

## Description

### TECHNICAL FIELD

Examples relate to communication technology, more specifically to providing multicast connectivity check by IP packets.

### BACKGROUND

In a communication network, nodes may wish to determine connectivity with other nodes. For example, a node may wish to determine connectivity with a remote peer endpoint. EP 1 344 349 is a relevant document in the art.

### SUMMARY

The invention is defined by the appended claims.

### BRIEF DESCRIPTION OF THE DRAWINGS

The teaching herein can be readily understood by considering the following detailed description in conjunction with the accompanying drawings, in which:
FIG. 1 depicts a high-level block diagram of a communication network;
FIG. 2 depicts a high-level block diagram of a MCC packet according to examples;
FIG. 3 depicts a high-level block diagram of a flags field of a MCC packet according to examples;
FIG. 4 depicts a high-level block diagram of a table of flag values indicating respective MCC packet transmission intervals according to examples;
FIG. 5 depicts a high-level block diagram of an apparatus according to examples;
FIG. 6 depicts a high-level block diagram of a communication network;
FIG. 7 depicts a high-level block diagram of an apparatus according to examples;
FIG. 8 depicts a flow diagram of a method according to examples;
FIG. 9 depicts a flow diagram of a method according to examples;
FIG. 10 depicts a high-level block diagram of a communication network;
FIG. 11 depicts a high-level block diagram of a communication network.

### DETAILED DESCRIPTION

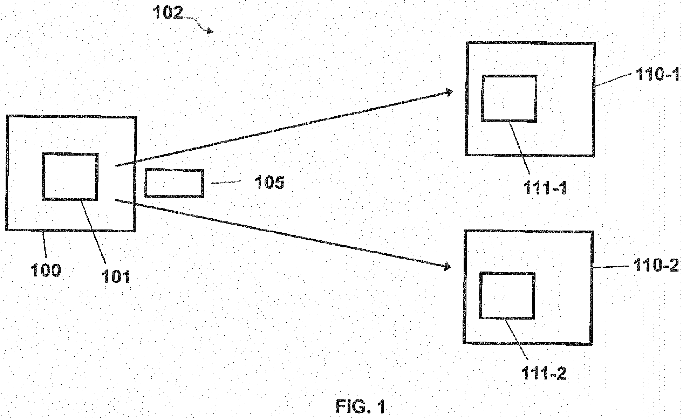

FIG. 1 depicts a high-level block diagram of a communication network, exemplarily communication network 102. The communication 102 network illustratively comprises apparatus 101. Apparatus 101 may be implemented in IP node 100. Apparatus 101 comprises circuitry providing means for performing sending a multicast connectivity check, MCC, packet 105 to a plurality of receiving nodes 110 (exemplarily 110-1, 110-2), wherein the MCC packet 105 is an Internet Protocol, IP, (multicast) packet. The means of apparatus 101 may be configured to perform sending the MCC packet 110 to each of the plurality of receiving nodes 110 on a MCC packet transmission interval. The means of apparatus 101 may further be configured to perform joining a multicast group before sending one or more MCC packets 105 to the plurality of receiving nodes 110. Joining a multicast group may be implemented by registering to a multicast group. The multicast group may comprise the apparatus 101 and the receiving nodes 110. In particular, the means may be configured to perform sending a MCC packet 105 to receiving nodes 110 which joint the multicast group.

FIG. 1 further shows apparatuses 111-1 and 111-2 (collectively 111) being illustratively part of the communication network 102. An apparatus 111 may be included into a receiving node 110. Receiving node 110-1 may comprise apparatus 111-1. Receiving node 110-2 may comprise apparatus 111-2. The functions of the receiving nodes 110 may be implemented by or in cooperation with the respective apparatus 111.

The means of apparatus 101 may be configured to start performing sending a MCC packet 105 to a plurality of receiving nodes 110 on a first MCC packet transmission interval and to repeat performing sending a MCC packet on consecutive MCC packet transmission intervals.

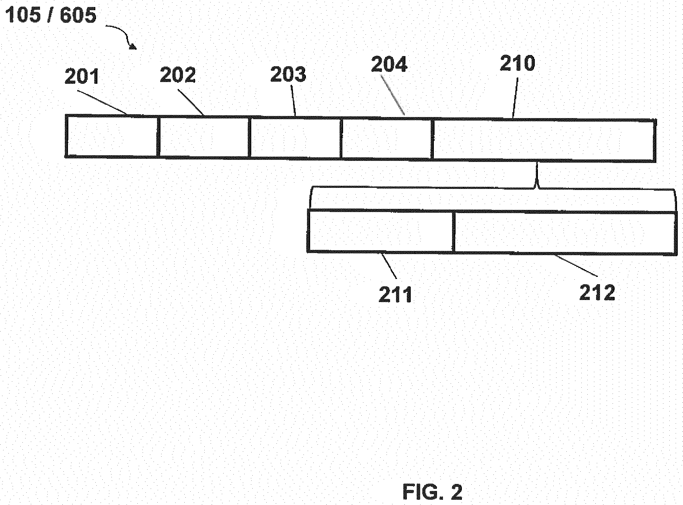

FIG. 2 depicts a high-level block diagram of a MCC packet according to examples, for example of a MCC packet 105. The MCC packet 105 may comprise a physical layer header 201, a link layer header 202, a network layer header 203. The MCC packet 105 may comprise application data 210. The MCC packet 105 may comprise a transport layer header 204, wherein the transport layer header 204 is in particular a UDP header. The application data 210 may comprise a MCC packet transmission interval (not explicitly depicted in FIG. 2). The application data 210 may comprise multicast association data 212. More specifically, the application data 210 may comprise a flags field 211.

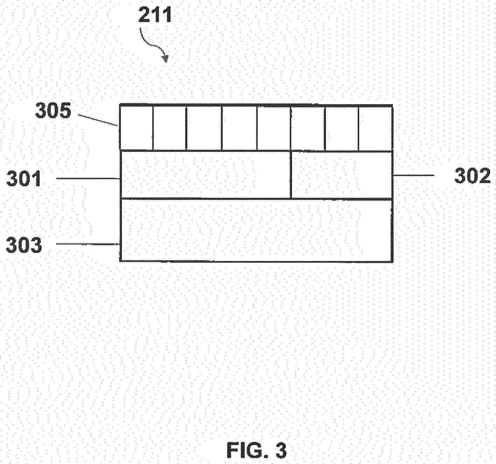

FIG. 3 depicts a high-level block diagram of a flags field of a MCC packet according to examples, for example of a flags field 211. The flags field 211 may comprise a field 301 reserved for future use. The flags field 211 may comprise field 302 carrying (the length of) the MCC packet transmission interval. The flags field 211 may comprise field 303 carrying the length of the multicast association data 210. The elements 305 are not part of the flags field 211, but they should indicate the number of bits which are used for the parts of the flags field 211, thus elements 305 may be bit "0", "1", "2", "3", "4", "5", "6", "7" (from left to right). The flags field 211 may be 16bit in length, first 5 bits are reserved for future use (field 301) and may be set with 0. Next 3 bits may carry (the length of) the MCC packet transmission interval (field 302). Next 8 bits (field 303) may carry the length of the multicast association data 212. In case multicast association data 210 are not present, the length of the multicast association data 210 may be set with 0.

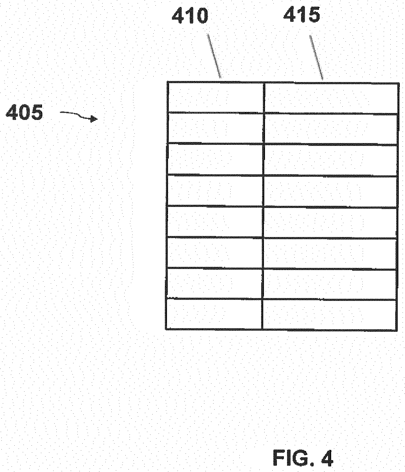

FIG. 4 depicts a high-level block diagram of a table of flag values indicating respective MCC packet transmission intervals according to examples, for example a table 405 of flag values 410 indicating respective MCC packet transmission intervals 415. The flag values 410 may be inserted in the left part of the table 405. A flag value 410 may be configured by three bits. The MCC packet transmission intervals 415 may be inserted in the right part of the table 415. The flag values 410 might correspond to respective (lengths of) MCC packet transmission intervals 415 as follows:
Flag value "000" may correspond to (a length of) MCC packet transmission interval "Invalid value".
Flag value "001" may correspond to (a length of) MCC packet transmission interval "3.33 ms", wherein "ms" means "millisecond".
Flag value "010" may correspond (a length of) to MCC packet transmission interval "10 ms".
Flag value "011" may correspond (a length of) to MCC packet transmission interval "100 ms".
Flag value "100" may correspond (a length of) to MCC packet transmission interval "1 s", wherein "s" means "second".
Flag value "101" may correspond (a length of) to MCC packet transmission interval "10 s".
Flag value "110" may correspond to (a length of) MCC packet transmission interval "1 min", wherein "min" means "minute".
Flag value "111" may correspond to (a length of) MCC packet transmission interval "10 min".

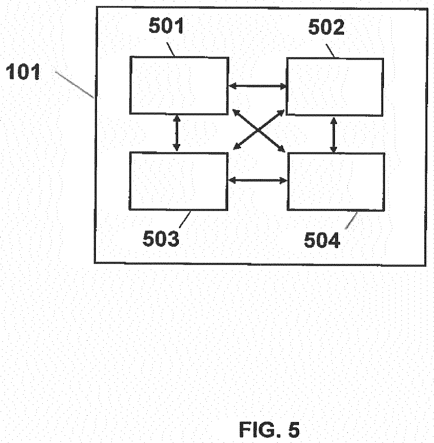

FIG. 5 depicts a high-level block diagram of an apparatus according to examples, for example of apparatus 101. Apparatus 101 may comprise circuitry for means 501, 502, 503, 504 which are communicatively connected. More specifically, apparatus 101 may comprise at least one processor 501, and at least one memory 502 including computer program code, the at least one memory 502 and computer program code configured to, with the at least one processor 501, cause the performance of the apparatus 101. Processor 501 may be a central processing unit, CPU, a processor having a set of processor cores, a processor core of a processor, or the like. Memory 502 may be a random access memory, RAM, a read only memory, ROM, or the like. Apparatus 101 may comprise a cooperating element 503. The cooperating element 503 may be a hardware device. The cooperating element 503 may be a process that can be loaded into the memory 502 and executed by the processor 501 to cause the performance of the apparatus 101. The cooperating element 503 (including associated data structures) may be stored on a computer readable medium, such as a storage device or other storage element (e.g., a magnetic drive, an optical drive, or the like). Apparatus 101 may comprise one or more input/output devices 504. The input/output devices 504 may include one or more of a user input device (e.g., a keyboard, a keypad, a mouse, a microphone, a camera, or the like), a user output device (e.g., a display, a speaker, or the like), one or more network communication devices or elements (e.g., an input port, an output devices (e.g., a tape drive, a floppy drive, a hard disk drive, a compact disk drive, or the like), or the like, as well as various combinations thereof. It will be appreciated that apparatus 101 depicted in FIG. 5 may represent a general architecture and functionality suitable for implementing functional elements described herein, portions of functional elements described herein, or the like, as well as various combinations thereof.

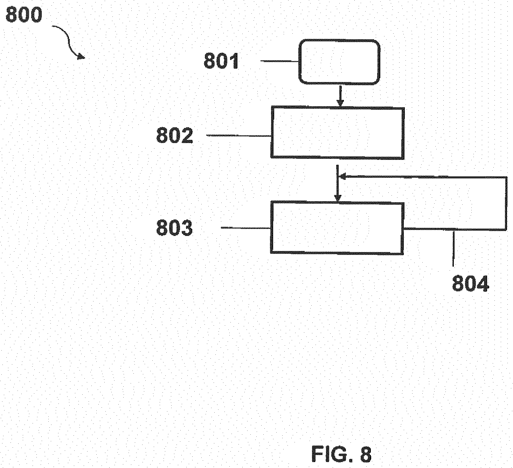

In an example, element 503 such depicted for example in FIG. 5 may be referred to as a (more specifically "non-transitory") computer readable medium 503, comprising program instructions for causing an apparatus 101 to perform at least the following: sending a multicast connectivity check, MCC, packet to a plurality of receiving nodes, wherein the MCC packet is an Internet Protocol, IP, packet, and optionally further steps of the related method described in examples, (e.g. method 800). In an example, element 503 may be referred to as a computer readable medium 503, storing instructions which when loaded into and executed by a processor 501, the processor being implemented in or in association with an apparatus 101, cause the processor 501 in cooperation with the apparatus 101 to implement a method, wherein the method comprises the step of sending a multicast connectivity check, MCC, packet to a plurality of receiving nodes, wherein the MCC packet is an Internet Protocol, IP, (multicast) packet, and optionally one or more of the further steps described in the context of the above defined corresponding method (e.g., method 800 which is described below with reference to FIG. 8).

Further, it is noted that an apparatus 111 (depicted in FIG. 1) included in a receiving node 110 may comprise at least one processor, a memory, a cooperating element and Input/Output devices. An apparatus similar to apparatus 111 will be described in more detail in the context of the following examples (e.g., in the context of apparatus 611).

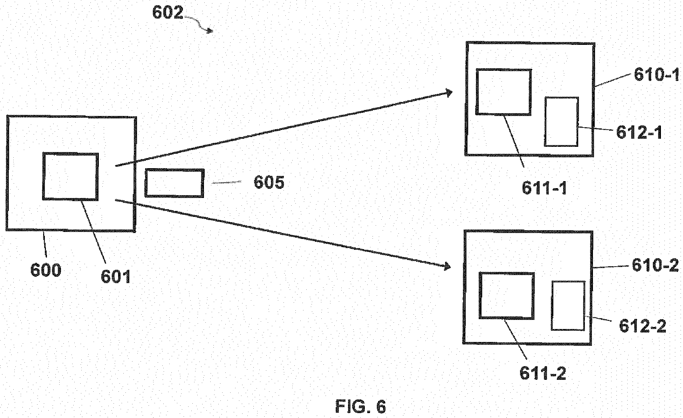

FIG. 6 depicts a high-level block diagram of a communication network, more specifically of communication network 602. Communication network 602 may comprise illustratively apparatuses 611-1 and 611-2 (collectively 611). What is described in the context of apparatus 611-1 may apply analogously to apparatus 611-2. Apparatus 611-1 comprises means for performing receiving one or more multicast connectivity check, MCC, packets 605 from a remote peer endpoint 600. The one or more MCC packets 605 are Internet Protocol, IP, (multicast) packets. Communication network 602 may correspond to communication network 102 described above. Apparatus 611-1 may correspond to apparatus 111-1 described above. Apparatus 611-1 may be implemented in IP node 610-1. (Similarly, apparatus 611-2 may be implemented in IP node 610-2). Remote peer endpoint 600 may correspond to IP node 100. Remote peer endpoint 600 may include apparatus 601. Apparatus 601 may correspond to apparatus 101 described above. The structure and components of a MCC packet 605 may correspond to the structure and components of a MCC packet 105 described above. Therefore, for the structure and components of MCC packet 605 it is referred to what has been described in the context of MCC packet 105, in particular with reference to FIGS. 2 - 4, which applies analogously to MCC packet 605.

In an example, means of apparatus 611-1 are configured to perform receiving a (first) MCC packet 605 from the remote peer endpoint 600 (said (first) MCC packet 605 being one of the above mentioned one or more MCC packets 605). The means of apparatus 611-1 may be configured to perform, after receiving said (first) MCC packet 605 from the remote peer endpoint 600, retrieving information out of said (first) MCC packet 605. Said information may comprise a (length of the) MCC packet transmission interval. Said information may comprise a unicast IP address of the remote peer endpoint 600. Means of apparatus 611-1 may be configured to perform storing the retrieved information in database 612-1. More specifically, means of apparatus 611-1 may be configured to perform storing the retrieved unicast address of the remote peer endpoint 600 in a list included in database 612-1, wherein storing the unicast IP address of a remote peer endpoint in list might be termed providing an entry of said remote peer endpoint in the list. Database 612-1 may be included or in adjacency to apparatus 611-1. In FIG. 6, database 612-1 is in adjacency to apparatus 611-1 and is included in IP node 610-1 which includes apparatus 611-1. (Similarly, IP-node 610-2 includes apparatus 611-2 and database 612-2. Database 612-1 and database 612-2 may be collectively referred to as database 612). Means of apparatus 611-1 may be configured to perform setting a counter value to n, wherein n is a positive integer value configured by a user. The counter value may be part of the information retrieved out of the (first) MCC packet 605.

Means of apparatus 611-1 may be configured to perform determining whether receiving a further MCC packet 605 from the remote peer endpoint 600 within a MCC packet transmission interval. For clarity, it is noted that the "further" MCC packet 605 is one of the one or more MCC packets 605 mentioned above. In a example, the means of apparatus 611-1 are further configure to perform, in case of receiving a further MCC packet 605 within a MCC packet transmission interval, updating the database 612-1 about confirmed connectivity with the remote peer endpoint 600, refreshing the counter by setting the counter value to n, and proceeding with determining whether receiving a further MCC packet 605 within a MCC packet transmission interval. In updating the database 612-1 about confirmed connectivity with the remote peer endpoint 600, means of apparatus 611-1 may be configured to perform confirming the entry of remote peer endpoint 600, e.g. by refreshing the entry, setting a state flag, adding a (current) time-stamp, etc.). In an example, the means of apparatus 611-1 are further configured to perform, in case of not receiving a further MCC packet 605 within a MCC packet transmission interval, reducing the counter value by 1, and determining whether the counter value is greater than 0 (i.e., "zero"). In an example, the means of apparatus 611-1 are further configured to perform, in case the counter value is greater than 0, proceeding with determining whether receiving a further MCC packet 605 within a MCC packet transmission interval. In an example, the means of apparatus 611-1 are further configured to perform, in case the counter value is equal to 0, updating the database 612-1 about denied connectivity with the remote peer endpoint 600. In an example, in updating the database 612-1 about denied connectivity with the remote peer endpoint 600, means of apparatus 611-1 may be configured to perform removing an entry (e.g. the unicast address) of the remote peer endpoint 600 out of a list (e.g., the list being stored in database 612-1). In an example, the means of apparatus 611-1 may be further configured to perform, in case of denied connectivity with the remote peer endpoint 600, sending a message to a user (e.g., an operator) informing the user about denied connectivity with the remote peer endpoint 600.

In an example, the means of apparatus 611-1 are further configured to performing, before receiving one or more multicast connectivity check, MCC, packets 605 from a remote peer endpoint 600, joining a multicast group. The multicast group may comprise the apparatus 611-1 as a receiving node. The multicast group may further comprise further receiving nodes, e.g. further apparatuses 611, e.g. apparatus 611-2. The multicast group further may comprise the remote peer endpoint 600 as a sending node.

In examples, the means of apparatus 611-1 may be further configured to perform joining a (further) multicast group with a (further) remote peer endpoint different from remote peer endpoint 600. Thus, in examples, means of apparatus 611-1 may be configured to perform joining a (first) multicast group with remote peer endpoint 600 (e.g. together with one or more further apparatuses 611 as receiving nodes), and joining the (further) multicast group (e.g. together with one or more further apparatuses 611 as receiving nodes) with the (further) remote peer endpoint.

Similarly, means of apparatus 100 described above, may be configured to perform joining a (first) multicast group with one or more apparatuses 111 and joining a (second) multicast group with one or more apparatus 111, wherein one or more of the one or more apparatuses 111 of the (first) multicast group may be identical or different to one or more of the one or more apparatuses 111 of the (second) multicast group.

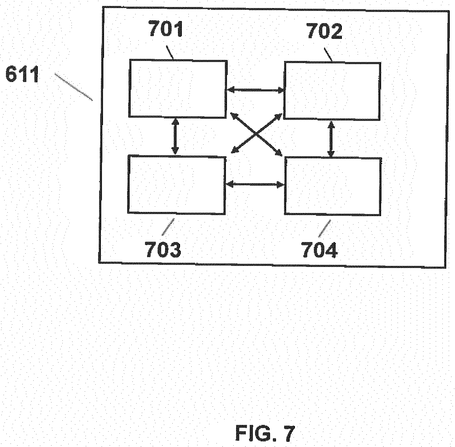

FIG. 7 depicts a high-level block diagram of an apparatus according to examples, for example of apparatus 611-1. Apparatus 611-1 comprises illustratively means 701, 702, 703 and 704 of which one or more may be communicatively connected (the one to the other(s)). These means may comprise at least one processor 701, and at least one memory 702 including computer program code, the at least one memory 702 and computer program code configured to, with the at least one processor 701, cause the performance of the apparatus 611. Apparatus 611-1 may further comprise a cooperating element 703. Apparatus 611-1 may further comprise input/output devices 704.

More specifically, processor 701 may be a central processing unit, CPU, a processor having a set of processor cores, a processor core of a processor, or the like. Memory 702 may be a random access memory, RAM, a read only memory, ROM, or the like. Apparatus 111-1 may comprise a cooperating element 703. The cooperating element 703 may be a hardware device. The cooperating element 703 may be a process that can be loaded into the memory 702 and executed by the processor 701 to cause the performance of the apparatus 611-1. The cooperating element 703 (including associated data structures) may be stored on a computer readable medium, such as a storage device or other storage element (e.g., a magnetic drive, an optical drive, or the like). Apparatus 611-1 may comprise one or more input/output devices 704. The input/output devices 704 may include one or more of a user input device (e.g., a keyboard, a keypad, a mouse, a microphone, a camera, or the like), a user output device (e.g., a display, a speaker, or the like), one or more network communication devices or elements (e.g., an input port, an output devices (e.g., a tape drive, a floppy drive, a hard disk drive, a compact disk drive, or the like), or the like, as well as various combinations thereof.

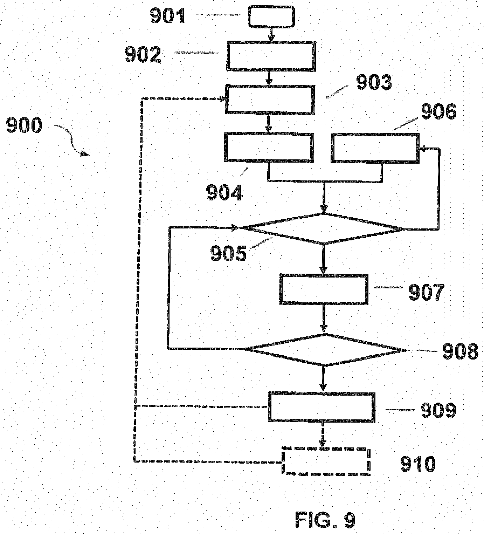

In an example, element 703 such depicted for example in FIG. 7 may be referred to as a (more specifically "non-transitory") computer readable medium 703, comprising program instructions for causing apparatus 611 to perform at least the following: receiving a multicast connectivity check, MCC, packet 605 from a remote peer endpoint 600, wherein the MCC packet 605 is an Internet Protocol, IP, packet, and optionally further steps of the related method described in examples (e.g., method 900). In an example, element 703 may be referred to as a computer readable medium 703, storing instructions which when loaded into and executed by a processor 701, the processor 701 being implemented in or in association with an apparatus 611, cause the processor 701 in cooperation with the apparatus 611 to implement a method wherein the method comprises the step of receiving one or more multicast connectivity check, MCC, packets from a remote peer endpoint, wherein the one or more MCC packets are Internet Protocol, IP, (multicast) packets, and optionally one or more of the further steps described in the context of the above defined corresponding method (e.g., method 900 which is described below with reference to FIG. 9).

FIG. 8 depicts a flow diagram of a method according to examples, for example of method 800. It will be appreciated that, although primarily presented herein as being performed serially, one or more of the steps of method 800 may be performed contemporaneously or in a different order than as presented in FIG. 8 or may be omitted. At block 801, method 800 starts. In examples, method 800 may then proceed to block 802. The description of block 802 follows below. At block 803, an apparatus may send a multicast connectivity check, MCC, packet to a plurality of receiving nodes. The apparatus may be apparatus 101 described above. The receiving nodes may be receiving nodes 110 described above. The MCC packet may be an Internet Protocol, IP, (multicast) packet. The MCC packet may correspond to MCC packet 105 described above. The apparatus may send the MCC packet to each of the plurality of receiving nodes. The apparatus sends the MCC packet on a MCC packet transmission interval which may be configured by a user (e.g., an operator). As depicted by reference sign 804, the apparatus sends a MCC packet to the plurality of receiving nodes repeatedly on consecutive MCC packet transmission intervals, more specifically consecutive MCC packets on consecutive MCC packet transmission intervals (one MCC packet on/within one MCC packet transmission interval). In other words, sending a MCC packet to a plurality of receiving nodes may starts on a first MCC packet transmission interval and is repeated on consecutive MCC packet transmission intervals. Again, in other words, a first MCC packet may be sent to the plurality of receiving nodes on a first MCC packet transmission interval and respective further MCC are sent to the plurality of receiving nodes on respective further MCC packet transmission intervals. Again, for clarity, it might be defined in other words that on one MCC packet transmission interval one MCC packet is sent, this one MCC packet is sent to each receiving nodes of the plurality of receiving nodes, this sending of (a respective) one MCC packet is repeated on consecutive MCC packet transmission intervals. As mentioned, the MCC packet may correspond to MCC packet 105 described above. For details in regard of the structure and components of the MCC packet it is referred to what has been described above, in particular with reference to FIGS. 2 - 4. In examples, at block 802 mentioned above, before sending the MCC packet to the plurality of receiving nodes, the apparatus may join a multicast group. The multicast group may comprise the apparatus and the plurality of receiving nodes. Joining a multicast group may comprise registering with the multicast group using an appropriate protocol, e.g., IGMP (Internet Group Management Protocol).

FIG. 9 depicts a flow diagram of a method according to examples, for example of method 900. It will be appreciated that, although primarily presented herein as being performed serially, one or more of the steps of method 900 may be performed contemporaneously or in a different order than as presented in FIG. 9 or may be omitted. At block 901, method 900 starts. In examples, method 900 may proceed to block 902. The description of block 902 follows below. At block 903, an apparatus may receive a multicast connectivity check, MCC, packet from a remote peer endpoint. The MCC packet may be a (multicast) Internet Protocol, IP, packet. The apparatus may be apparatus 611-1 described above, the remote peer endpoint may be remote peer endpoint 600 described above, the MCC packet may correspond to a MCC packet 605 described above. Thus, for the structure and components of the MCC packet, it is referred to what has been described above, in particular in the context of FIGS. 2 - 4. In examples, after receiving the MCC packet from the remote peer endpoint, at block 904, the apparatus may retrieve information out of the MCC packet. The information retrieved out of the MCC packet may comprise a (length of the) MCC packet transmission interval. Further, the information retrieved out of the MCC packet may comprise a unicast address of the remote peer endpoint. At block 904, the apparatus may store the retrieved information in a database. The database may be included or in adjacency to the apparatus. Further, at block 904, the apparatus may set a counter value to n, wherein n is a positive integer value. The counter value n may be configured by a user. The counter value n may be defined by the remote peer endpoint, in particular based on the configuration of the user. The counter value n may be referred to as (or may indicate) the number of MCC packet transmission intervals the apparatus (more generally a receiving node) would wait (without receiving a MCC packet from the remote peer endpoint) until it determines denied connectivity (this means considers the connection from the remote peer endpoint (more generally sending node) broken. The counter value n may be included in the information retrieved out of the received MCC packet or may be provided otherwise to the apparatus. The counter may be configured in or in adjacency of the apparatus. For example, the means of the apparatus might be configured to implement the counter. For example, n may be configured by the user to be "3" (i.e., n = 3). At block 905, the apparatus may determine whether the apparatus receives a further MCC packet from the remote peer endpoint within a MCC packet transmission interval. The apparatus may know the (length of the) MCC packet transmission interval based on the information retrieved out of the received above MCC packet which may have included the (length of the) MCC packet transmission interval. In case, the apparatus receives a further MCC packet within the MCC packet transmission interval, method 900 may proceed to block 906. At block 906, the apparatus may update the database about confirmed connectivity with the remote peer endpoint (however, in other examples, updating the database about confirmed connectivity with the remote peer endpoint in case of receiving a further MCC packet in a MCC packet transmission interval may be omitted). Further, at block 906, the apparatus may refresh the counter by (re-)setting the counter value to n. In this example, the counter value has been set by the apparatus to 3 at block 904 (since the counter value has been configured by the user to n = 3). Thus, assuming the apparatus actually receives at block 905 a further MCC packet within the MCC packet transmission interval, then at block 906 refreshes the counter value by "re-"setting the counter value to 3. Then, method 900 may proceed (again) to block 905. At block 905, apparatus may proceed with determining whether the apparatus receives a further MCC packet within a MCC packet transmission interval. (For clarity, said MCC packet transmission follows temporarily the above mentioned MCC packet transmission interval, thus it might be defined that said MCC packet transmission interval is a "next" MCC packet transmission interval in regard and after the "previous" MCC packet transmission interval, wherein the "next", the "previous" and all "consecutive" ("next") MCC packet transmission intervals may have the same length or (at least two of these) may have different lengths, and one of these starts when the previous ends). In the present example, the MCC packet transmission intervals have the same length. In case, at block 905, the apparatus does not receive a further MCC packet within a MCC packet transmission interval, the method proceeds to block 907, where the apparatus reduces the counter value by 1. Assuming in this example, apparatus has actually not received a further MCC packet at block 905, then at block 907, the apparatus reduces the counter value by 1. Assuming, the counter value has been previously set to n = 3 at block 904 (and possibly (re-)set in the above described block 906). Then, at block 907, in this example, the counter is reduced by 1, resulting in 3 - 1 = 2. Thus, in this example, the counter value is now "2". The method may proceed to block 908. At block 908, the apparatus may determine whether the counter value is greater than 0. In case the counter value is greater than 0, method proceeds to block 905, where apparatus proceeds with determining whether the apparatus receives a further MCC packet within a MCC packet transmission interval. In the example (counter value being now "2"), (at block 908, it is determined that) the counter value is actually greater than 0, and the apparatus proceeds at block 905 to determine whether apparatus receives a further MCC packet with a MCC packet transmission interval. (In this context, for clarity, it is noted that the feature "proceed" may be understood as "step back" or "step further" according to the context as it will be clear from the description with reference to the drawings). Assuming at block 905, the apparatus receives a further MCC packet with a MCC packet transmission interval, method proceeds to block 906, where apparatus may update the database with confirmed connectivity, and refreshes the counter value by setting the counter value to n. This means, in this example where the counter value has previously been (reduced to) "2", because of previously non receiving a further MCC packet in a MCC packet transmission interval, the counter value is set (back) to "n = 3". Assuming (in the contrary), at block 905 (in the example, where the counter value has been (reduced to) "2") the apparatus does not receive a further MCC packet within a ("next") MCC packet transmission interval, the apparatus proceeds (again) to block 907 where the counter value is (again) reduced by 1, which is in the described example 2 - 1 = 1. Method proceeds (again) to block 905, where apparatus (again) proceeds to determine whether the apparatus receives a further MCC packet with a ("next") MCC packet transmission interval. Assuming, apparatus does not receive a further MCC packet in a ("next") MCC packet transmission interval, method proceeds (again) to step 907, where the counter value is reduced by 1, this means in the example, 1 - 1 = 0. In case the counter value is equal to 0, which is actually true in the described example, method proceeds to block 909, where the apparatus updates the database about denied connectivity with the remote peer endpoint. In an example, at block 909 updating the database with information about denied connectivity with the remote peer endpoint may comprise removing an entry of the remote peer endpoint out of a list. For example, the apparatus may remove the unicast IP address of the remote peer endpoint out of a list in the database (in which, at the above described block 903, the unicast IP address has previously been stored). Further, in case of denied connectivity at block 909, the method may proceed to block 910, where the apparatus may send a message to a user (e.g., an operator) informing the user about denied connectivity with the remote peer endpoint. Further, after block 909 and/or after block 910, the method may proceed to block 903 (in this case: "step back" to block 903) where the apparatus may receive a MCC packet from the remote peer endpoint and may implement steps as described above.

In examples, before the apparatus receives a MCC packet from a remote peer endpoint at block 903, at block 902 (mentioned already above), the apparatus may join a multicast group. The multicast group may comprise the apparatus (e.g., apparatus 611-1) as a receiving node. The multicast group may further comprise further receiving nodes (e.g. further apparatuses 611). The multicast group may further comprise the remote peer endpoint (e.g. remote peer endpoint 600) as a sending node. Joining a multicast group may comprise registering with the multicast group using an appropriate protocol, e.g., IGMP (Internet Group Management Protocol).

In this context, it is noted that methods described herein may be implemented by apparatus(es) described herein such as mentioned in the disclosure. Therefore, not all features (details, steps etc.) may have been described in detail in the context of both the apparatus and the related method, but nevertheless they might be present in both of them. Thus, what has been described in the context an apparatus, may be applied correspondingly in the context of the related method; and what has been described in the context of a method, may be applied correspondingly in the context of the related apparatus. Further, what has been described in the context of the apparatus sending MCC packets and the related method may be applicable, so far as appropriate, in the context of the apparatus receiving MCC packets and the related method. For example, what has been described in regard of a MCC packet in the context of the apparatus sending the MCC packet may be applicable (and thus read as disclosed) in the regard of the MCC packet in the context of the apparatus receiving the MCC packet. For example, what has been described in detail in regard of the MCC packet transmission interval in the context of the apparatus sending a MCC packet, may be applicable and thus read as disclosed in the context of the apparatus receiving the MCC packet.

Further, features, unless explicitly defined to be exclusive, might be combined in an example. Further, examples might be combined in advantage. For example, an apparatus which is a sending node (source) of a first multicast group, may be a receiver of a second multicast group. Thus, in an example, one or more nodes (up to each node) of a communication network may periodically (on consecutive MCC packet transmission intervals) send out multicast messages which other nodes can use to validate connectivity at their own choice.

In an example, an apparatus which is a sending node of a multicast group (e.g. apparatus 101) may be also a receiving node (e.g. receiving node 110) of said multicast group. Further, within a multicast group, one or more nodes (even all nodes of the multicast group) may be both sending nodes and receiving nodes (at the same time), sending MCC packets to the other nodes of the multicast group and receiving MCC packets from the other nodes of the multicast group, respectively. As the sending node defines the MCC packet transmission interval which it also communicates in the MCC packet (by including the MCC packet transmission interval in the MCC packet), different nodes can select (configure/define) different MCC packet transmission intervals when sending. All nodes in the multicast group need to keep track of which MCC packet transmission interval any other node in the multicast group communicated in their last MCC packet, to know by when it should expect the next MCC packet from that node.

In an example, all nodes in a multicast group select (configure/define) a constant transmission interval amongst the consecutive MCC packets which are sent by the respective node(s). In another example, the MCC packet transmission intervals are changing, for example a node increases its MCC packet transmission interval, as described above in more detail.

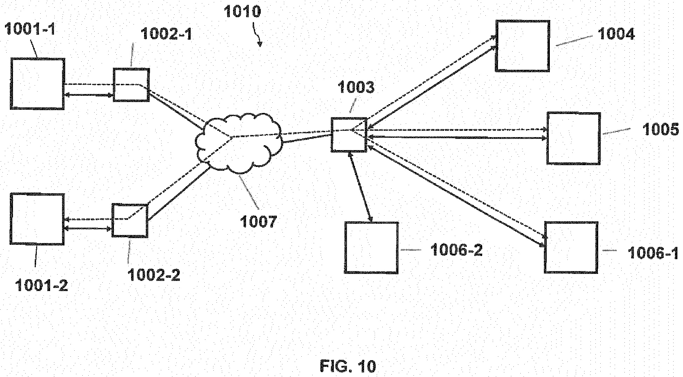

FIG. 10 depicts a high-level block diagram of a communication network 1010. In communication network 1010, the above described apparatuses and methods may be implemented analogously. BTS (Base Transceiver Station) 1001-1 is connected via router 1002-1 to the IP network 1007. Similarly, BTS 1001-2 is connected via router 1002-2 to the IP network 1007. Further, AP (Access Point) Server 1004, Gateway 1005, NMS (Network Management System) 1006-1 and NMS 1006-2 are connected via router 1003 to the IP network 1007. The respective connections are depicted in FIG. 10 as bold lines and arrows. BTS 1001-1 sends a MCC packet to BTS 1001-2, AP Server 1004, Gateway 1005 and NMS 1006-1. The sending of the MCC packet is depicted in FIG. 10 as dotted lines and arrows. In an example, BTS 1001-1 may correspond to or include apparatus 101. BTS 1001-2, AP Server 1004, Gateway 1005 and NMS 1006-1 may correspond to or include the receiving nodes 110, e.g. BTS 1001-2 may correspond to receiving node 110-1, AP Server 1004 may correspond to receiving node 110-2, Gateway 1005 and NMS 1006-1 may correspond to a further receiver node 110, respectively. NMS 1006-2 did not join the multicast group and therefore does not receive the MCC packet. Method 800 may thus be implemented in the communication network depicted in FIG. 10. Since implementation of method 800 has been described in detail above, description of the steps is omitted here. Further, in an example, BTS 1001-1 may correspond to remote endpoint 600. Each of BTS 1001-2, AP Server 1004, Gateway 1005 and NMS 1006-1 may correspond to or include the apparatus 611. Method 900 may thus be implemented in the communication network depicted in FIG. 10. For the details of the implementation, it is referred to the detailed description in the context of method 900.

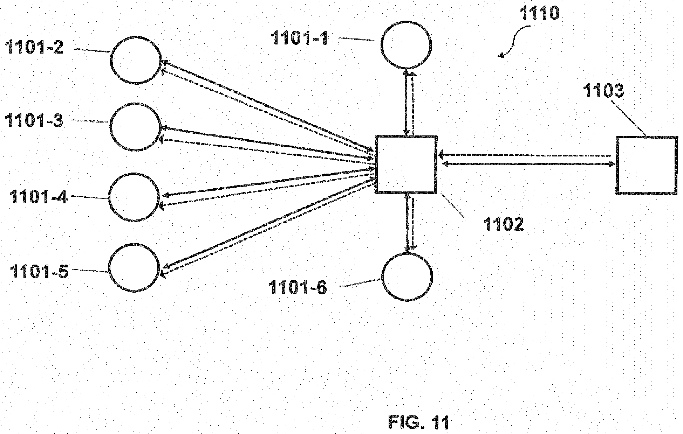

FIG. 11 depicts a high-level block diagram of a communication network 1110. In communication network 1110, the above described apparatuses and methods may be implemented analogously. Radio Modules 1101-1, 1101-2, 1101-3, 1101-4, 1101-5 and 1101-6 are connected (depicted as bold double arrows) via Router 1102 with gNB-DU (New Generation Node B - Distributed Unit) 1103. gNB-DU 1003 sends a MCC packet via Router 1102 to Radio Modules 1101-1, 1101-2, 1101-3, 1101-4, 1101-5 and 1101-6. The sending of the MCC packet is depicted as dotted arrows. In an example, the gNB-DU 1103 may correspond or include apparatus 101. Radio Modules 1101-1, 1101-2, 1101-3, 1101-4, 1101-5 and 1101-6 may correspond or include receiving nodes 110. Method 800 may thus be implemented in the communication network depicted in FIG. 11 analogously to the implementation described in detail above. Further, in an example, the gNB-DU 1103 may correspond or include remote end point 600. Each of Radio Modules 1101-1, 1101-2, 1101-3, 1101-4, 1101-5 and 1101-6 may correspond or include the apparatus 611. Method 900 may thus be implemented in the communication network depicted in FIG. 11 analogously to the implementation described in detail above.

It will be appreciated that the functions depicted and described herein may be implemented in software (e.g., via implementation of software on one or more processors, for executing on a general purpose computer (e.g., via execution by one or more processors) so as to implement a special purpose computer, and the like) and/or may be implemented in hardware (e.g., using a general purpose computer, one or more application specific integrated circuits (ASIC), and/or any other hardware equivalents).

It will be appreciated that at least some of the steps and/or functions discussed herein as software methods may be implemented within hardware, for example, as circuitry that cooperates with the processor to perform various method steps. Portions of the functions/elements described herein may be implemented as a computer program product wherein computer instructions, when processed by a computer, adapt the operation of the computer such that the methods and/or techniques described herein are invoked or otherwise provided. Instructions for invoking the inventive methods may be stored in fixed or removable media (e.g., non-transitory computer-readable media), transmitted via a data stream in a broadcast or other signal bearing medium, and/or stored within a memory within a computing device operating according to the instructions. Unless otherwise indicated or derivable from the technical context, connections between elements may be implemented by wire or wirelessly.

It will be appreciated that any block diagrams herein may represent conceptual views of illustrative circuitry embodying examples. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

It will be appreciated that the term "or" as used herein refers to a non-exclusive "or" unless otherwise indicated (e.g., use of "or else" or "or in the alternative"). Similarly, it is noted that features and/or examples may be implemented in combination unless explicitly described to be exclusive. Further, the number of elements in the examples and in particular in the drawings (FIGS.) is only for illustrative reasons and more elements than depicted may be present unless indicated explicitly or derivable from the technical context that only one element is disclosed in the related example (e.g., (only) one MCC packet may be transmitted on one MCC packet transmission interval to each of the plurality of receiving nodes, but more than the two depicted receiving nodes may be present). Further, some features, in particular in the FIGS., might have been omitted for clarity, although the skilled person will be aware that these features are usually present. For example, a communication network such as e.g. depicted in FIG. 1 and described in the related passages of the description, might include further elements although not disclosed explicitly herein.

At least some examples of the disclosures provide the advantage that connectivity check is implemented efficiently based on IP packets, more specifically on the IP-layer. In particular, on one MCC packet transmission interval, only one multicast packet is generated by a source (e.g., sending apparatus/ sending IP node) of a multicast group which is sent to each of the plurality of the receivers of the multicast group. Further, methods according to examples are very much optimized and efficient as they require very minimum configuration from the application (which uses the methods). Since methods according to examples establish one to many associations (one sending node - many receiving nodes), they are very much CPU efficient. Advantageously, methods according to examples can be applied to any node which supports the IP protocol. Advantageously, methods of examples may be provide a protocol for automatically monitoring connectivity, which may be applied in networks which implement automatic connectivity or even in SON (Self-Organizing Networks).

It will be appreciated that, various examples which incorporate the teachings presented herein have been shown and described in detail herein. As is readily apparent to those skilled in the art, variations and modifications can be effected while remaining within the scope of the disclosure. Accordingly, the foregoing disclosure, description, and drawings are for illustrative purposes only and have no restrictive character. The scope of the disclosure is defined by the attached claims.

## Claims

1. Apparatus (101) comprising means for performing:
sending a multicast connectivity check, MCC, packet (105) to a plurality of receiving nodes (110), wherein the MCC packet (105) includes a MCC packet transmission interval and is an Internet Protocol, IP, packet, wherein multicast connectivity check is implemented on IP layer, wherein sending a MCC packet (105) to a plurality of receiving nodes (110) is repeated on consecutive MCC packet transmission intervals,
**characterized in that** a length of a MCC packet transmission interval (302) is variable, wherein the length of the MCC packet transmission interval of a first MCC packet is different from the length of the MCC packet transmission interval of a next MCC packet.

2. The apparatus (101) of claim 1 , wherein the MCC packet (105) comprises:
a physical layer header (201), a link layer header (202), a network layer header (203) and application data (210), wherein the application data (210) comprises the MCC packet transmission interval (302) carried in a flags field (211).

3. The apparatus (101) of any of claims 1 to 2, wherein the means comprise at least one processor (501), and at least one memory (502) including computer program code, the at least one memory (502) and computer program code configured to, with the at least one processor (501), cause the performance of the apparatus (101).

4. Apparatus (611) comprising means for performing:
receiving at least two multicast connectivity check, MCC, packets (605) from a remote peer endpoint (600), wherein the at least two MCC packets (605) are Internet Protocol, IP, packets, wherein multicast connectivity check is implemented on IP layer and based on a MCC packet transmission interval,
**characterized in that** a length of a MCC packet transmission interval (302) is variable, wherein the means are configured for retrieving information included in each of the at least two received MCC packets (605) comprising the respective length of the MCC packet transmission interval (302), wherein the length of the MCC packet transmission interval of a first MCC packet is different from the length of the MCC packet transmission interval of a next MCC packet.

5. The apparatus (611) of claim 4, wherein a MCC packet (605) of the one or more MCC packets comprises:
a physical layer header (201), a link layer header (202), a network layer header (203) and application data (210), wherein the application data (210) comprise the MCC packet transmission interval (302) carried in a flags field (211).

6. The apparatus (611) of claim 4, wherein the apparatus (611) further comprises means for performing:
after receiving a MCC packet (605) from the remote peer endpoint (600), said MCC packet (605) being one of the at least two MCC packets (605):
retrieving information out of the MCC packet (605), wherein the information retrieved out of the MCC packet (605) comprises the length of the MCC packet transmission interval,
storing the retrieved information in a database (612),
setting a counter value to n, wherein n is an integer value configured by a user,
determining whether receiving a further MCC packet (605) from the remote peer endpoint (600) within a MCC packet transmission interval, the further MCC packet (605) being one of the at least two MCC packets (605),
in case of receiving a further MCC packet (605) within a MCC packet transmission interval:
updating the database (612) about confirmed connectivity with the remote peer endpoint (600), refreshing the counter by setting the counter value to n, and proceeding with determining whether receiving a further MCC packet (605) within a MCC packet transmission interval,
in case of not receiving a further MCC packet (605) within a MCC packet transmission interval:
reducing the counter value by 1;
determining whether the counter value is greater than 0,
in case the counter value is greater than 0:
proceeding with determining whether receiving a further MCC packet (605) within a MCC packet transmission interval,
in case the counter value is equal to 0:
updating the database (612) about denied connectivity with the remote peer endpoint (600).

7. The apparatus (611) of any of claims 5 - 6, wherein the means comprise at least one processor (701), and at least one memory (702) including computer program code, the at least one memory (702) and computer program code configured to, with the at least one processor (701), cause the performance of the apparatus (611).

8. A method (800) comprising:
sending (803), by an apparatus, a multicast connectivity check, MCC, packet to a plurality of receiving nodes, wherein the MCC packet includes a MCC packet transmission interval and is an Internet Protocol, IP, packet, wherein multicast connectivity check is implemented on IP layer, wherein sending a MCC packet to a plurality of receiving nodes is repeated (804) on consecutive MCC packet transmission intervals,
**characterized in that** a length of a MCC packet transmission interval (302) is variable, wherein the length of the MCC packet transmission interval of a first MCC packet is different from the length of the MCC packet transmission interval of a next MCC packet.

9. A method (900) comprising:
receiving (903), by an apparatus, at least two multicast connectivity check, MCC, packets from a remote peer endpoint, wherein the at least two MCC packets are Internet Protocol, IP, packets, wherein multicast connectivity check is implemented on IP layer and based on a MCC packet transmission interval,
**characterized in that** a length of a MCC packet transmission interval (302) is variable and wherein the method further comprises retrieving information included in each of the at least two received MCC packets (605) comprising the respective length of the MCC packet transmission interval (302), wherein the length of the MCC packet transmission interval of a first MCC packet is different from the length of the MCC packet transmission interval of a next MCC packet.

10. The method (900) of claim 9 further comprising:
after receiving (903) the MCC packet from the remote peer endpoint:
retrieving (904), by the apparatus, information out of the MCC packet, wherein the information retrieved out of the MCC packet comprises the length of the MCC packet transmission interval, storing (904), by the apparatus, the retrieved information in a database,
setting (904), by the apparatus, a counter value to n, wherein n is an integer value configured by a user,
determining (905), by the apparatus, whether receiving, by the apparatus, a further MCC packet from the remote peer endpoint within a MCC packet transmission interval,
in case of receiving a further MCC packet within a MCC packet transmission interval:
updating (906) the database about confirmed connectivity with the remote peer endpoint, refreshing (906) the counter by setting the counter value to n, and proceeding with determining (905), by the apparatus, whether receiving, by the apparatus, a further MCC packet within a MCC packet transmission interval,
in case of not receiving a further MCC packet within a MCC packet transmission interval:
reducing (907), by the apparatus, the counter value by 1, and
determining (908), by the apparatus, whether the counter value is greater than 0,
in case the counter value is greater than 0:
proceeding with determining (905), by the apparatus, whether receiving, by the apparatus, a further MCC packet within a MCC packet transmission interval,
in case the counter value is equal to 0:
updating (909) the database about denied connectivity with the remote peer endpoint.

11. The method (900) of claim 10, wherein the method (900) further comprises:
before receiving (903) a MCC packet from a remote peer endpoint,
joining (902), by the apparatus, a multicast group, wherein the multicast group comprises the apparatus as a receiving node, further receiving nodes and the remote peer endpoint as a sending node.

12. A computer readable medium (503), comprising program instructions for causing an apparatus (101) to perform at least the following: sending a multicast connectivity check, MCC, packet to a plurality of receiving nodes, wherein the MCC packet includes a MCC packet transmission interval and is an Internet Protocol, IP, packet, wherein multicast connectivity check is implemented on IP layer, wherein sending a MCC packet to a plurality of receiving nodes is repeated (804) on consecutive MCC packet transmission intervals,
**characterized in that** a length of a MCC packet transmission interval (302) is variable, wherein the length of the MCC packet transmission interval of a first MCC packet is different from the length of the MCC packet transmission interval of a next MCC packet.

13. A computer readable medium (703), comprising program instructions for causing the apparatus (611) to perform at least the following: receiving at least two multicast connectivity check, MCC, packets from a remote peer endpoint, wherein the at least two MCC packets are Internet Protocol, IP, packets, wherein multicast connectivity check is implemented on IP layer and based on a MCC packet transmission interval,
**characterized in that** a length of a MCC packet transmission interval (302) is variable and wherein the apparatus is further caused to perform:
retrieving information included in each of the at least two received MCC packets (605) comprising the respective length of the MCC packet transmission interval (302),
wherein the length of the MCC packet transmission interval of a first MCC packet is different from the length of the MCC packet transmission interval of a next MCC packet.

## Patentansprüche

1. Vorrichtung (101), die Mittel zum Durchführen von Folgendem umfasst:
Senden eines Multicastkonnektivitätsprüfungs(MCC)-Pakets (105) an eine Vielzahl von Empfangsknoten (110), wobei das MCC-Paket (105) ein MCC-Paketübertragungsintervall beinhaltet und ein Internetprotokoll(IP)-Paket ist, wobei die Multicastkonnektivitätsprüfung auf einer IP-Schicht implementiert wird, wobei das Senden eines MCC-Pakets (105) an eine Vielzahl von Empfangsknoten (110) in aufeinanderfolgenden MCC-Paketübertragungsintervallen wiederholt wird,
**dadurch gekennzeichnet, dass** eine Länge eines MCC-Paketübertragungsintervalls (302) variabel ist, wobei sich die Länge des MCC-Paketübertragungsintervalls eines ersten MCC-Pakets von der Länge des MCC-Paketübertragungsintervalls eines nächsten MCC-Pakets unterscheidet.

2. Vorrichtung (101) nach Anspruch 1, wobei das MCC-Paket (105) Folgendes umfasst:
einen physischen Schichtheader (201), einen Verbindungsschichtheader (202), einen Netzwerkschichtheader (203) und Anwendungsdaten (210), wobei die Anwendungsdaten (210) das MCC-Paketübertragungsintervall (302) umfassen, das sich in einem Markerfeld (211) befindet.

3. Vorrichtung (101) nach einem der Ansprüche 1 bis 2, wobei die Mittel mindestens einen Prozessor (501) und mindestens einen Speicher (502) umfassen, der Computerprogrammcode beinhaltet, wobei der mindestens eine Speicher (502) und der Computerprogrammcode dazu ausgelegt sind, mit dem mindestens einen Prozessor (501) die Durchführung der Vorrichtung (101) zu veranlassen.

4. Vorrichtung (611), die Mittel zum Durchführen von Folgendem umfasst:
Empfangen von mindestens zwei Multicastkonnektivitätsprüfungs(MCC)-Paketen (605) von einem entfernten Peerendpunkt (600), wobei die mindestens zwei MCC-Pakete (605) Internetprotokoll(IP)-Pakete sind, wobei die Multicastkonnektivitätsprüfung auf einer IP-Schicht und auf Basis eines MCC-Paketübertragungsintervalls implementiert wird,
**dadurch gekennzeichnet, dass** eine Länge eines MCC-Paketübertragungsintervalls (302) variabel ist, wobei die Mittel zum Abrufen von Informationen ausgelegt sind, die in jedem der mindestens zwei empfangenen MCC-Pakete (605) enthalten sind und die jeweilige Länge des MCC-Paketübertragungsintervalls (302) umfassen, wobei sich die Länge des MCC-Paketübertragungsintervalls eines ersten MCC-Pakets von der Länge des MCC-Paketübertragungsintervalls von einem nächsten MCC-Paket unterscheidet.

5. Vorrichtung (611) nach Anspruch 4, wobei ein MCC-Paket (605) des einen oder der mehreren MCC-Pakete Folgendes umfasst:
einen physischen Schichtheader (201), einen Verbindungsschichtheader (202), einen Netzwerkschichtheader (203) und Anwendungsdaten (210), wobei die Anwendungsdaten (210) das MCC-Paketübertragungsintervall (302) umfassen, das sich in einem Markerfeld (211) befindet.

6. Vorrichtung (611) nach Anspruch 4, wobei die Vorrichtung (611) ferner Mittel zum Durchführen von Folgendem umfasst:
nach Empfangen eines MCC-Pakets (605) vom entfernten Peerendpunkt (600), wobei das MCC-Paket (605) eines der mindestens zwei MCC-Pakete (605) ist:
Abrufen von Informationen aus dem MCC-Paket (605), wobei die Informationen, die aus dem MCC-Paket (605) abgerufen werden, die Länge des MCC-Paketübertragungsintervalls umfassen,
Speichern der abgerufenen Informationen in einer Datenbank (612),
Einstellen eines Zählerwerts auf n, wobei n ein ganzzahliger Wert ist, der von einem Benutzer ausgelegt ist,
Bestimmen, ob ein weiteres MCC-Paket (605) vom entfernten Peerendpunkt (600) in einem MCC-Paketübertragungsintervall empfangen werden soll, wobei das weitere MCC-Paket (605) eines der mindestens zwei MCC-Pakete (605) ist,
in einem Fall, in dem ein weiteres MCC-Paket (605) in einem MCC-Paketübertragungsintervall empfangen wird:
Aktualisieren der Datenbank (612) über eine bestätigte Konnektivität mit dem entfernten Peerendpunkt (600), Auffrischen des Zählers durch Einstellen des Zählerwerts auf n und Fortfahren mit dem Bestimmen, ob ein weiteres MCC-Paket (605) in einem MCC-Paketübertragungsintervall empfangen werden soll,
in einem Fall, in dem kein weiteres MCC-Paket (605) Übertragung in einem MCC-Paketübertragungsintervall empfangen wird:
Reduzieren des Zählerwerts um 1;
Bestimmen, ob der Zählerwert größer ist als 0,
in dem Fall, in dem der Zählerwert größer ist als 0:
Fortfahren mit dem Bestimmen, ob ein weiteres MCC-Paket (605) in einem MCC-Paketübertragungsintervall empfangen werden soll,
in dem Fall, in dem der Zählerwert gleich 0 ist:
Aktualisieren der Datenbank (612) über eine zurückgewiesene Konnektivität mit dem entfernten Peerendpunkt (600).

7. Vorrichtung (611) nach einem der Ansprüche 5 bis 6, wobei die Mittel mindestens einen Prozessor (701) und mindestens einen Speicher (702) umfassen, der Computerprogrammcode beinhaltet, wobei der mindestens eine Speicher (702) und der Computerprogrammcode dazu ausgelegt sind, mit dem mindestens einen Prozessor (701) die Durchführung der Vorrichtung (611) zu veranlassen.

8. Verfahren (800), das Folgendes umfasst:
Senden (803) eines Multicastkonnektivitätsprüfungs(MCC)-Pakets durch eine Vorrichtung an eine Vielzahl von Empfangsknoten, wobei das MCC-Paket ein MCC-Paketübertragungsintervall beinhaltet und ein Internetprotokoll(IP)-Paket ist, wobei die Multicastkonnektivitätsprüfung auf einer IP-Schicht implementiert wird, wobei das Senden eines MCC-Pakets an eine Vielzahl von Empfangsknoten in aufeinanderfolgenden MCC-Paketübertragungsintervallen wiederholt (804) wird,
**dadurch gekennzeichnet, dass** eine Länge eines MCC-Paketübertragungsintervalls (302) variabel ist, wobei sich die Länge des MCC-Paketübertragungsintervalls eines ersten MCC-Pakets von der Länge des MCC-Paketübertragungsintervalls eines nächsten MCC-Pakets unterscheidet.

9. Verfahren (900), das Folgendes umfasst:
Empfangen (903) von mindestens zwei Multicastkonnektivitätsprüfungs(MCC)-Paketen durch eine Vorrichtung von einem entfernten Peerendpunkt, wobei die mindestens zwei MCC-Pakete Internetprotokoll(IP)-Pakete sind, wobei die Multicastkonnektivitätsprüfung auf einer IP-Schicht auf Basis eines MCC-Paketübertragungsintervalls implementiert wird,
**dadurch gekennzeichnet, dass** eine Länge eines MCC-Paketübertragungsintervalls (302) variabel ist, und wobei das Verfahren ferner das Abrufen von Informationen umfasst, die in jedem der mindestens zwei empfangenen MCC-Pakete (605) enthalten sind und die jeweilige Länge des MCC-Paketübertragungsintervalls (302) umfassen, wobei sich die Länge des MCC-Paketübertragungsintervalls eines ersten MCC-Pakets von der Länge des MCC-Paketübertragungsintervalls von einem nächsten MCC-Paket unterscheidet.

10. Verfahren (900) nach Anspruch 9, das ferner Folgendes umfasst:
nach Empfangen (903) des MCC-Pakets vom entfernten Peerendpunkt:
Abrufen (904), von Informationen aus dem MCC-Paket durch die Vorrichtung, wobei die Informationen, die aus dem MCC-Paket abgerufen werden, die Länge des MCC-Paketübertragungsintervalls umfassen,
Speichern (904) der abgerufenen Informationen durch die Vorrichtung in einer Datenbank,
Einstellen (904) eines Zählerwerts durch die Vorrichtung auf n, wobei n ein ganzzahliger Wert ist, der von einem Benutzer ausgelegt ist,
Bestimmen (905) durch die Vorrichtung, ob ein weiteres MCC-Paket durch die Vorrichtung in einem MCC-Paketübertragungsintervall von entfernten Peerendpunkt empfangen werden soll,
in einem Fall, in dem ein weiteres MCC-Paket in einem MCC-Paketübertragungsintervall empfangen wird:
Aktualisieren (906) der Datenbank über eine bestätigte Konnektivität mit dem entfernten Peerendpunkt, Auffrischen (906) des Zählers durch Einstellen des Zählerwerts auf n und Fortfahren mit dem Bestimmen (905) durch die Vorrichtung, ob ein weiteres MCC-Paket in einem MCC-Paketübertragungsintervall empfangen werden soll,
in einem Fall, in dem kein weiteres MCC-Paket Übertragung in einem MCC-Paketübertragungsintervall empfangen wird:
Reduzieren (907) des Zählerwerts durch die Vorrichtung um 1, und
Bestimmen (908) durch die Vorrichtung, ob der Zählerwert größer ist als 0,
in dem Fall, in dem der Zählerwert größer ist als 0:
Fortfahren mit dem Bestimmen (905) durch die Vorrichtung, ob ein weiteres MCC-Paket durch die Vorrichtung in einem MCC-Paketübertragungsintervall empfangen werden soll,
in dem Fall, in dem der Zählerwert gleich 0 ist:
Aktualisieren (909) der Datenbank über eine zurückgewiesene Konnektivität mit dem entfernten Peerendpunkt.

11. Verfahren (900) nach Anspruch 10, wobei das Verfahren (900) ferner Folgendes umfasst:
vor Empfangen (903) eines MCC-Pakets von einem entfernten Peerendpunkt,
Eintreten (902) in eine Multicastgruppe durch die Vorrichtung, wobei die Multicastgruppe die Vorrichtung als einen Empfangsknoten, weitere Empfangsknoten und den entfernten Peerendpunkt als einen Sendeknoten umfasst.

12. Computerlesbares Medium (503), das Programmanweisungen zum Veranlassen einer Vorrichtung (101), mindestens Folgendes durchzuführen, umfasst:
Senden eines Multicastkonnektivitätsprüfungs(MCC)-Pakets an eine Vielzahl von Empfangsknoten, wobei das MCC-Paket ein MCC-Paketübertragungsintervall beinhaltet und ein Internetprotokoll(IP)-Paket ist, wobei die Multicastkonnektivitätsprüfung auf einer IP-Schicht implementiert wird, wobei das Senden eines MCC-Pakets an eine Vielzahl von Empfangsknoten in aufeinanderfolgenden MCC-Paketübertragungsintervallen wiederholt (804) wird,
**dadurch gekennzeichnet, dass** eine Länge eines MCC-Paketübertragungsintervalls (302) variabel ist, wobei sich die Länge des MCC-Paketübertragungsintervalls eines ersten MCC-Pakets von der Länge des MCC-Paketübertragungsintervalls eines nächsten MCC-Pakets unterscheidet.

13. Computerlesbares Medium (703), das Programmanweisungen zum Veranlassen der Vorrichtung (611), mindestens Folgendes durchzuführen, umfasst: Empfangen von mindestens zwei Multicastkonnektivitätsprüfungs(MCC)-Pakete von einem entfernten Peerendpunkt, wobei die mindestens zwei MCC-Pakete Internetprotokoll(IP)-Pakete sind, wobei die Multicastkonnektivitätsprüfung auf einer IP-Schicht und auf Basis eines MCC-Paketübertragungsintervalls implementiert wird,
**dadurch gekennzeichnet, dass** eine Länge eines MCC-Paketübertragungsintervalls (302) variabel ist, und wobei die Vorrichtung ferner veranlasst wird, Folgendes durchzuführen:
Abrufen von Informationen, die in jedem der mindestens zwei empfangenen MCC-Pakete (605) enthalten sind und die jeweilige Länge des MCC-Paketübertragungsintervalls (302) umfassen, wobei sich die Länge des MCC-Paketübertragungsintervalls eines ersten MCC-Pakets von der Länge des MCC-Paketübertragungsintervalls von einem nächsten MCC-Paket unterscheidet.

## Revendications

1. Appareil (101) comprenant des moyens pour réaliser ce qui suit :
envoyer un paquet de vérification de connectivité multidiffusion, MCC, (105) à une pluralité de nœuds de réception (110), dans lequel le paquet MCC (105) comporte un intervalle de transmission de paquet MCC et est un paquet de protocole Internet, IP, dans lequel la vérification de connectivité multidiffusion est mise en œuvre sur une couche IP, dans lequel l'envoi d'un paquet MCC (105) à une pluralité de nœuds de réception (110) est répété sur des intervalles de transmission de paquet MCC consécutifs,
**caractérisé en ce qu'**une longueur d'un intervalle de transmission de paquet MCC (302) est variable, dans lequel la longueur de l'intervalle de transmission de paquet MCC d'un premier paquet MCC est différente de la longueur de l'intervalle de transmission de paquet MCC d'un paquet MCC suivant.

2. Appareil (101) selon la revendication 1, dans lequel le paquet MCC (105) comprend :
un en-tête de couche physique (201), un en-tête de couche de liaison (202), un en-tête de couche réseau (203) et des données d'application (210), dans lequel les données d'application (210) comprennent l'intervalle de transmission de paquet MCC (302) transporté dans un champ de drapeaux (211).

3. Appareil (101) de l'une des revendications 1 et 2, dans lequel les moyens comprennent au moins un processeur (501) et au moins une mémoire (502) comportant un code de programme informatique, l'au moins une mémoire (502) et le code de programme informatique étant configurés pour, avec l'au moins un processeur (501), provoquer le fonctionnement de l'appareil (101).

4. Appareil (611) comprenant des moyens pour réaliser ce qui suit :
recevoir au moins deux paquets de vérification de connectivité multidiffusion, MCC, (605) d'un point d'extrémité homologue distant (600), dans lequel les au moins deux paquets MCC (605) sont des paquets de protocole Internet, IP, dans lequel la vérification de connectivité multidiffusion est mise en œuvre sur une couche IP et sur la base d'un intervalle de transmission de paquet MCC,
**caractérisé en ce qu'**une longueur d'un intervalle de transmission de paquet MCC (302) est variable, dans lequel les moyens sont configurés pour récupérer des informations incluses dans chacun des au moins deux paquets MCC (605) reçus comprenant la longueur respective de l'intervalle de transmission de paquet MCC (302),
dans lequel la longueur de l'intervalle de transmission de paquet MCC d'un premier paquet MCC est différente de la longueur de l'intervalle de transmission de paquet MCC d'un paquet MCC suivant.

5. Appareil (611) selon la revendication 4, dans lequel un paquet MCC (605) des un ou plusieurs paquets MCC comprend :
un en-tête de couche physique (201), un en-tête de couche de liaison (202), un en-tête de couche réseau (203) et des données d'application (210), dans lequel les données d'application (210) comprennent l'intervalle de transmission de paquet MCC (302) transporté dans un champ de drapeaux (211).

6. Appareil (611) selon la revendication 4, dans lequel l'appareil (611) comprend en outre des moyens pour réaliser ce qui suit :
après avoir reçu un paquet MCC (605) du point d'extrémité homologue distant (600), ledit paquet MCC (605) étant un des au moins deux paquets MCC (605) :
récupérer des informations à partir du paquet MCC (605), dans lequel les informations récupérées à partir du paquet MCC (605) comprennent la longueur de l'intervalle de transmission de paquet MCC,
stocker les informations récupérées dans une base de données (612),
définir une valeur de compteur à n, dans lequel n est une valeur entière configurée par un utilisateur,
déterminer si un paquet MCC (605) supplémentaire est reçu du point d'extrémité homologue distant (600) dans un intervalle de transmission de paquet MCC, le paquet MCC (605) supplémentaire étant un des au moins deux paquets MCC (605),
dans le cas de la réception d'un paquet MCC (605) supplémentaire dans un intervalle de transmission de paquet MCC :
mettre à jour la base de données (612) concernant la connectivité confirmée avec le point d'extrémité homologue distant (600), actualiser le compteur en définissant la valeur de compteur à n, et continuer à déterminer si un paquet MCC (605) supplémentaire est reçu dans un intervalle de transmission de paquet MCC,
dans le cas de non réception d'un paquet MCC (605) supplémentaire dans un intervalle de transmission de paquet MCC :
réduire la valeur de compteur de 1 ;
déterminer si la valeur de compteur est supérieure à 0,
dans le cas où la valeur de compteur est supérieure à 0 :
continuer à déterminer si un paquet MCC (605) supplémentaire est reçu dans un intervalle de transmission de paquet MCC,
dans le cas où la valeur de compteur est égale à 0 :
mettre à jour la base de données (612) concernant la connectivité refusée avec le point d'extrémité homologue distant (600).

7. Appareil (611) de l'une des revendications 5 et 6, dans lequel les moyens comprennent au moins un processeur (701) et au moins une mémoire (702) comportant un code de programme informatique, l'au moins une mémoire (702) et le code de programme informatique étant configurés pour, avec l'au moins un processeur (701), provoquer le fonctionnement de l'appareil (611).

8. Procédé (800) comprenant les étapes suivantes :
envoyer (803), par un appareil, un paquet de vérification de connectivité multidiffusion, MCC, à une pluralité de nœuds de réception, dans lequel le paquet MCC comporte un intervalle de transmission de paquet MCC et est un paquet de protocole Internet, IP, dans lequel la vérification de connectivité multidiffusion est mise en œuvre sur une couche IP, dans lequel l'envoi d'un paquet MCC à une pluralité de nœuds de réception est répété (804) sur des intervalles de transmission de paquet MCC consécutifs,
**caractérisé en ce qu'**une longueur d'un intervalle de transmission de paquet MCC (302) est variable, dans lequel la longueur de l'intervalle de transmission de paquet MCC d'un premier paquet MCC est différente de la longueur de l'intervalle de transmission de paquet MCC d'un paquet MCC suivant.

9. Procédé (900) comprenant les étapes suivantes :
recevoir (903), par un appareil, au moins deux paquets de vérification de connectivité multidiffusion, MCC, d'un point d'extrémité homologue distant, dans lequel les au moins deux paquets MCC sont des paquets de protocole Internet, IP, dans lequel la vérification de connectivité multidiffusion est mise en œuvre sur une couche IP et sur la base d'un intervalle de transmission de paquet MCC,
**caractérisé en ce qu'**une longueur d'un intervalle de transmission de paquet MCC (302) est variable, et dans lequel le procédé comprend en outre la récupération d'informations incluses dans chacun des au moins deux paquets MCC (605) reçus comprenant la longueur respective de l'intervalle de transmission de paquet MCC (302),
dans lequel la longueur de l'intervalle de transmission de paquet MCC d'un premier paquet MCC est différente de la longueur de l'intervalle de transmission de paquet MCC d'un paquet MCC suivant.

10. Procédé (900) selon la revendication 9, comprenant en outre les étapes suivantes :
après avoir reçu (903) le paquet MCC du point d'extrémité homologue distant :
récupérer (904), par l'appareil, des informations à partir du paquet MCC, dans lequel les informations récupérées à partir du paquet MCC comprennent la longueur de l'intervalle de transmission de paquet MCC, stocker (904), par l'appareil, les informations récupérées dans une base de données,
définir (904), par l'appareil, une valeur de compteur à n, dans lequel n est une valeur entière configurée par un utilisateur,
déterminer (905), par l'appareil, si un paquet MCC supplémentaire est reçu par l'appareil du point d'extrémité homologue distant dans un intervalle de transmission de paquet MCC,
dans le cas de la réception d'un paquet MCC supplémentaire dans un intervalle de transmission de paquet MCC :
mettre à jour (906) la base de données concernant la connectivité confirmée avec le point d'extrémité homologue distant, actualiser (906) le compteur en définissant la valeur de compteur à n, et continuer à déterminer (905), par l'appareil, si un paquet MCC supplémentaire est reçu par l'appareil dans un intervalle de transmission de paquet MCC,
dans le cas de non réception d'un paquet MCC supplémentaire dans un intervalle de transmission de paquet MCC :
réduire (907), par l'appareil, la valeur de compteur de 1, et
déterminer (908), par l'appareil, si la valeur de compteur est supérieure à 0,
dans le cas où la valeur de compteur est supérieure à 0 :
continuer à déterminer (905), par l'appareil, si un paquet MCC supplémentaire est reçu par l'appareil dans un intervalle de transmission de paquet MCC,
dans le cas où la valeur de compteur est égale à 0 :
mettre à jour (909) la base de données concernant la connectivité refusée avec le point d'extrémité homologue distant.

11. Procédé (900) selon la revendication 10, dans lequel le procédé (900) comprend en outre les étapes suivantes :
avant de recevoir (903) un paquet MCC d'un point d'extrémité homologue distant,
rejoindre (902), par l'appareil, un groupe de multidiffusion, dans lequel le groupe de multidiffusion comprend l'appareil en tant que nœud de réception, des nœuds de réception supplémentaires et le point d'extrémité homologue distant en tant que nœud d'envoi.

12. Support lisible par ordinateur (503), comprenant des instructions de programme pour amener un appareil (101) à réaliser au moins ce qui suit : envoyer un paquet de vérification de connectivité multidiffusion, MCC, à une pluralité de nœuds de réception,
dans lequel le paquet MCC comporte un intervalle de transmission de paquet MCC et est un paquet de protocole Internet, IP, dans lequel la vérification de connectivité multidiffusion est mise en œuvre sur une couche IP, dans lequel l'envoi d'un paquet MCC à une pluralité de nœuds de réception est répété (804) sur des intervalles de transmission de paquet MCC consécutifs,
**caractérisé en ce qu'**une longueur d'un intervalle de transmission de paquet MCC (302) est variable, dans lequel la longueur de l'intervalle de transmission de paquet MCC d'un premier paquet MCC est différente de la longueur de l'intervalle de transmission de paquet MCC d'un paquet MCC suivant.

13. Support lisible par ordinateur (703), comprenant des instructions de programme pour amener l'appareil (611) à réaliser au moins ce qui suit : recevoir au moins deux paquets de vérification de connectivité multidiffusion, MCC, d'un point d'extrémité homologue distant,
dans lequel les au moins deux paquets MCC sont des paquets de protocole Internet, IP,
dans lequel la vérification de connectivité multidiffusion est mise en œuvre sur une couche IP et sur la base d'un intervalle de transmission de paquet MCC,
**caractérisé en ce qu'**une longueur d'un intervalle de transmission de paquet MCC (302) est variable, et dans lequel l'appareil est en outre amené à réaliser ce qui suit :
récupérer des informations incluses dans chacun des au moins deux paquets MCC (605) reçus comprenant la longueur respective de l'intervalle de transmission de paquet MCC (302),
dans lequel la longueur de l'intervalle de transmission de paquet MCC d'un premier paquet MCC est différente de la longueur de l'intervalle de transmission de paquet MCC d'un paquet MCC suivant.
